(19) Europäisches Patentamt
European Patent Office
Office européen des brevets

(11) Numéro de publication : **0 299 919 B1**

(12) **FASCICULE DE BREVET EUROPEEN**

(45) Date de publication du fascicule du brevet :
25.09.91 Bulletin 91/39

(51) Int. Cl.⁵ : **A61C 5/04**

(21) Numéro de dépôt : 88810379.3

(22) Date de dépôt : 09.06.88

(54) **Equipement pour le traitement des racines dentaires.**

(30) Priorité : 16.07.87 CH 2707/87

(43) Date de publication de la demande :
18.01.89 Bulletin 89/03

(45) Mention de la délivrance du brevet :
25.09.91 Bulletin 91/39

(84) Etats contractants désignés :
AT BE CH DE ES FR GB IT LI NL SE

(56) Documents cités :
EP-A- 0 201 119
AT-B- 147 367
AT-B- 150 414
BE-A- 817 778
CH-A- 603 145
CH-A- 611 508
DE-C- 1 072 772

(73) Titulaire : **MEDITEC S.A.**
c/o ABB Sécheron S.A. 14, avenue de Sécheron
CH-1211 Genève 21 (CH)

(72) Inventeur : **Grosrey, Jean**
Chemin de la Rupille
CH-1261 Arzier (CH)

(74) Mandataire : Vuille, Roman et al
c/o KIRKER & Cie S.A. 14, rue du Mont-Blanc
Case Postale 872
CH-1211 Genève 1 (CH)

## Description

Il a déjà été proposé diverses constructions d'appareils pour le traitement des racines dentaires. Certains de ces appareils (p. ex. brevet allemand N. 691.027, DOS 1.072.772, brevet suisse 611508, brevet US 3.919.775) utilisent, pour introduire un liquide de nettoyage ou de traitement à l'intérieur de la dent à traiter, un conduit dont l'extrémité de sortie est engagée le plus loin possible à l'intérieur du ou des canaux radiculaires de la dent. Toutefois, ces canaux sont tellement étroits qu'il est difficile sinon impossible d'atteindre sûrement l'apex de la dent avec ce liquide, d'où traitement non satisfaisant.

Dans le brevet suisse No 603.145, on place de façon étanche sur une ouverture pratiquée dans la partie de la dent opposée à la racine, un embout muni d'un conduit d'amenée de liquide et d'un conduit d'évacuation de liquide. En vue d'assurer un nettoyage efficace de l'intérieur de la dent, il est proposé dans ce brevet d'amener le liquide dans la dent en le soumettant à des impulsions périodiques combinées à des oscillations de fréquence sensiblement plus grande. Mais l'expérience a montré que cette solution ne permet pas un nettoyage complet de l'intérieur de la dent et n'assure pas que le liquide de traitement ou de nettoyage remplisse complètement les canaux radiculaires, condition pourtant nécessaire pour un nettoyage complet de tout l'intérieur de la dent.

La présente invention vise à fournir un équipement pour le traitement des racines dentaires qui soit exempt des défauts signalés des appareils connus.

L'équipement selon l'invention est conforme à la revendication 1.

Le dessin annexé représente, à titre d'exemple, une forme d'exécution de l'équipement selon l'invention.

Fig. 1 est un schéma bloc de l'ensemble de cet équipement.

Fig. 2 est une vue schématique partielle montrant la pompe de pression, la pompe de dépression et, à plus grande échelle, une dent munie de l'embout la reliant à ces pompes.

Fig. 3 est une vue en coupe de l'embout.

Fig. 4 est un diagramme de la pression à l'intérieur de la dent pendant le travail de l'équipement.

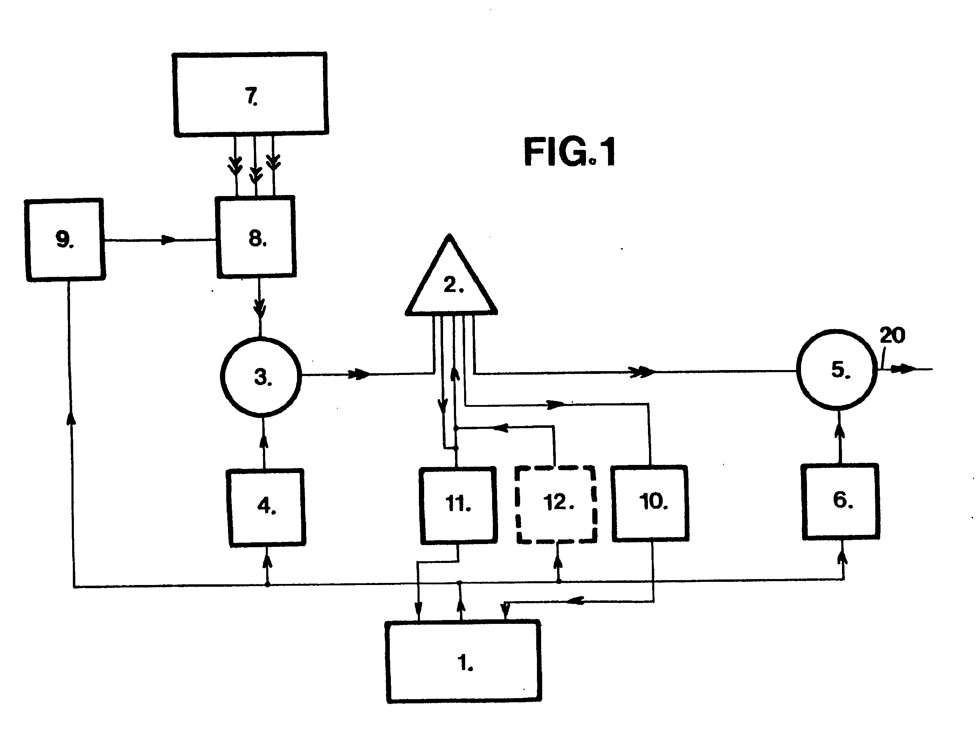

Sur la fig. 1, on voit en 1 un dispositif de commande générale, électronique, qui commande le fonctionnement au cours des différentes phases de travail. En 2 est un embout venant s'adapter sur la dent à traiter. 3 est une pompe de pression ; 4 est un dispositif de commande de cette pompe, lui-même commandé par le dispositif de commande générale 1.

En 5 se trouve une pompe de dépression et en 6 un dispositif de commande de cette pompe, lui-même commandé par 1.

La pompe 3 est reliée à l'embout 2.

En 7 se trouve un distributeur de produits liquides utilisés au cours des différentes phases du travail. Ce distributeur comprend plusieurs récipients, trois par exemple, contenant chacun un de ces produits.

8 est un dispositif de commutation, à électrovannes par exemple, permettant de connecter sélectivement la pompe de pression 3 à l'un ou l'autre des récipients se trouvant en 7.

Le dispositif de commutation 8 est lui-même commandé par un dispositif 9 de commande de commutation, qui est commandé par 1.

10 est un dispositif de mesure de la pression dans la dent, qui transmet les valeurs de pression mesurées au dispositif 1.

11 est un dispositif de mesure du degré d'attaque pendant la phase de nettoyage, c'est-à-dire d'élimination du nerf de la dent et des vaisseaux associés ; il fournit ses informations au dispositif 1.

Un dispositif 12 est commandé par 1 et commande l'ionophorèse pendant la phase de désinfection de la dent.

Sur la fig. 1, les lignes munies d'une flèche simple représentent les commandes, tandis que les lignes munies d'une flèche double représentent les écoulements de liquide.

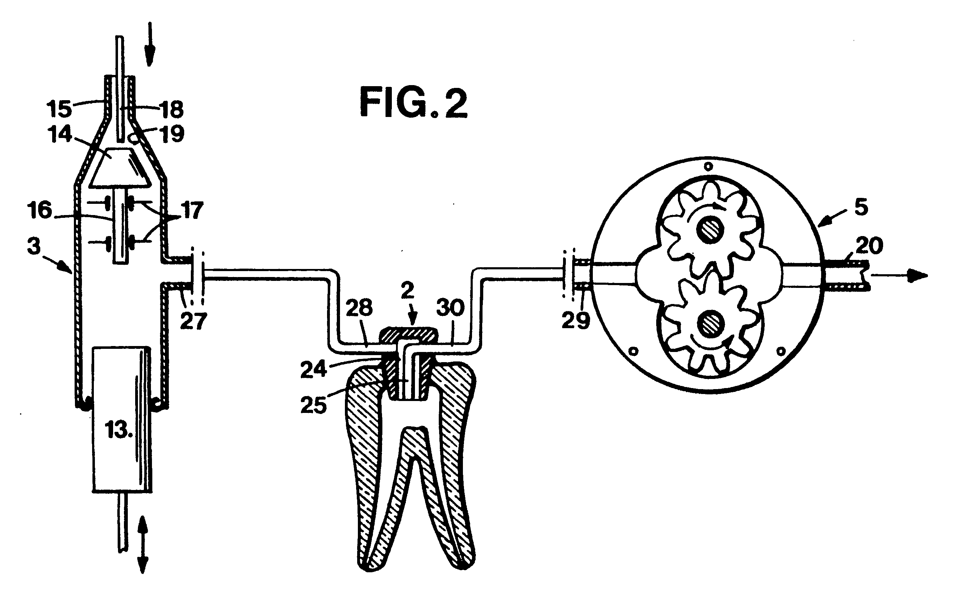

On voit sur la fig. 2 que la pompe de pression est une pompe à piston 13 à simple effet, avec une seule soupape automatique, 14, du côté aspiration 15, commandée par le liquide sur lequel agit la pompe. Le piston 13 est actionné par un moteur électrique non représenté, à vitesse réglable.

La soupape 14 est libre. Sa tige 16 est simplement guidée en 17 et, du côté opposé, se trouve une butée réglable 18 qui permet d'arrêter la soupape 14 avant qu'elle arrive en position de fermeture, c'est-à-dire sur son siège fixe 19, pour qu'en fin de course de fermeture, cette fermeture soit incomplète, un petit intervalle réglable selon la position donnée à la butée 18 existant alors entre la soupape 14 et son siège 19, comme on le verra plus loin.

Les matériaux des parties de la pompe 3 venant en contact avec le liquide doivent être parfaitement neutres (acier inoxydable, Téflon, Viton, par exemple).

La pompe de dépression 5 est une pompe à engrenages (fig. 2). Ses parties venant en contact avec le liquide sont aussi en matériel neutre (acier inoxydable 306L, Téflon, par exemple). Elle est entraînée, de préférence, par un entraînement magnétique, pour supprimer les problèmes d'étanchéité. Ses roues dentées doivent avoir suffisamment de jeu pour permettre un réglage de la vitesse, et pas trop pour permettre l'amorçage à sec. La sortie de la pompe donne dans un conduit d'évacuation 20.

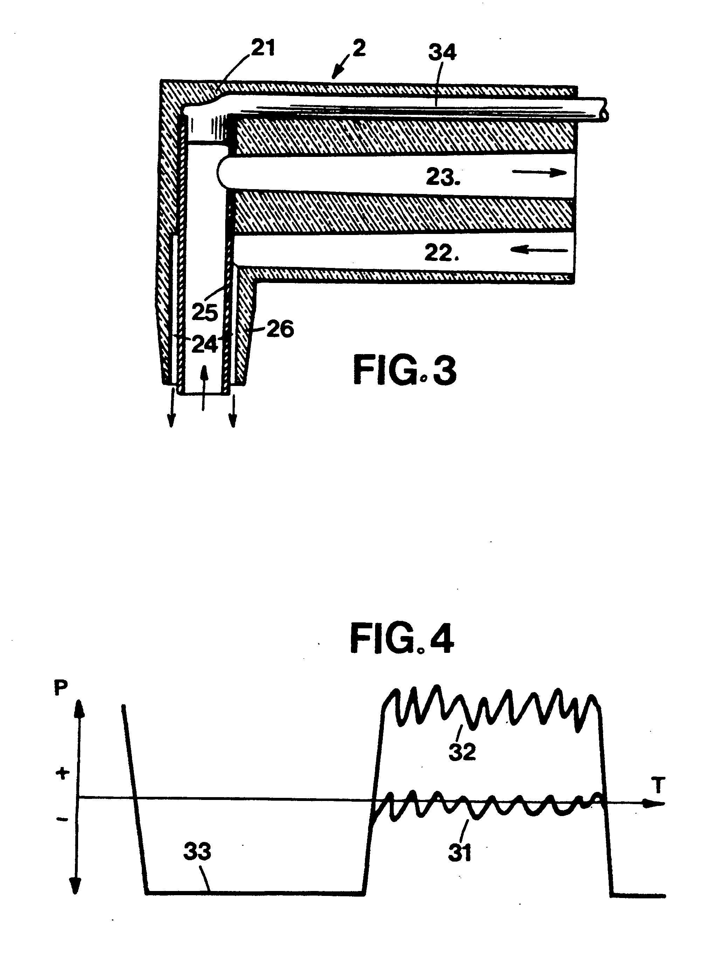

La fig. 3 montre, à plus grande échelle, une coupe de l'embout 2. C'est un corps 21 en matière moulée inattaquable par les liquides utilisés et dans lequel sont pratiqués un canal d'arrivée 22 du liquide, un canal de départ 23 et un injecteur 24 communiquant avec 22. A l'intérieur de l'injecteur 24 se trouve un conduit d'évacuation 25, en métal inattaquable par les liquides utilisés ; 25 est coaxial avec 24 et communique avec 23.

La section de passage annulaire d'injection, entre 24 et 25, est beaucoup plus petite que celle du conduit 25, au moins 10 fois plus petite par exemple.

Les conduits 24 et 25 débouchent à l'extrémité d'une partie conique 26 du corps 21 qui est destinée à être engagée de façon étanche dans une ouverture pratiquée dans l'extrémité d'une dent à traiter opposée à sa racine. Ainsi ces conduits débouchent dans la partie de la chambre pulpaire de la dent voisine de ladite ouverture, donc à distance du ou des canaux radiculaires de la dent.

A l'intérieur du corps 21 se trouve une extrémité d'un conducteur électrique 34 qui est soudé au conduit métallique d'évacuation 25.

Comme on le voit sur la fig. 2, le côté refoulement 27 de la pompe 3 est relié à l'injecteur 24 de l'embout 2 (fig. 3) par un tuyau 28 fixé dans le canal d'arrivée 22. Le conduit d'évacuation 25 est relié à l'entrée 29 de la pompe 5 par un tuyau 30 fixé dans le canal de départ 23 de l'embout (fig. 2 et 3).

Le distributeur de produits 7 comporte des récipients (non représentés) contenant chacun l'un des produits suivants :

Sérum physiologique (solution aqueuse à 0,9% de NaCl) ;

EDTA (solution aqueuse à 8% de sel disodique de l'acide éthylène diamine tétracétique) ;

Dakin (solution aqueuse à 2 à 5% NaOCl).

C'est le dispositif de commande centrale 1 qui assure, dans chaque phase du traitement, la liaison du côté aspiration 15 de la pompe de pression avec le récipient voulu, par l'intermédiaire du dispositif de commutation 8.

Le sérum physiologique est utilisé dans la phase de mesure de la résistance de l'intérieur de la dent, comme il sera expliqué plus loin, et dans la phase (facultative) d'ionophorèse, qui sera décrite dans la suite, et aussi comme produit de rinçage.

L'attaque à l'EDTA (facultative) intervient lorsqu'on veut agrandir des canaux radiculaires trop étroits. Ce produit attaque la dentine mais pas les tissus nerveux.

L'attaque du nerf et des vaisseaux associés a lieu au Dakin, dans la phase de nettoyage de l'intérieur de la dent. Le Dakin est aussi utilisé dans une phase de désinfection. L'attaque à l'EDTA doit précéder celle au Dakin.

Voici comment fonctionne l'équipement décrit.

Le liquide provenant de l'un des récipients du distributeur 7 est aspiré par la pompe 3 lorsque son piston 13 fait sa course d'aspiration, c'est-à-dire s'éloigne de la soupape 14 qui alors est ouverte sous l'effet de l'aspiration due au mouvement du piston. Lorsque ce piston arrive à fin de course d'aspiration et ensuite se rapproche de la soupape 14, cette dernière se ferme automatiquement sous l'effet de la pression dans le cylindre et la pompe chasse par sa sortie 27 du liquide sous pression qui se dirige vers l'embout 2 pour entrer dans la dent par l'injecteur 24.

Pendant tout ce cycle, la pompe 5 tourne et aspire, par le tuyau 30 et le conduit d'évacuation 25, du liquide se trouvant dans la dent. Le volume intérieur du tuyau 30 est suffisant pour que le liquide qui s'y trouve présente une inertie s'opposant à l'accélération de son écoulement, en direction de la pompe 5, pendant la phase de mise sous pression dans la dent, donc pendant la course de travail de la pompe 3. Autrement dit, cette inertie s'oppose à l'accélération du liquide dans le tuyau 30 sous l'effet de la pompe 3. Le liquide s'écoule donc dans ce tuyau uniquement sous l'effet de la pompe 5. Ainsi on est assuré d'une mise sous pression rapide dans la cavité dentaire.

Dans un premier temps, la pompe à engrenage 5 tend à faire le vide dans la chambre pulpaire. En effet, l'injecteur 24 est très fin comparé à l'échappement 25. De plus, la pompe 3 à simple effet est dans sa phase d'aspiration. Comme il n'y a pas de soupape d'échappement, cette pompe tend, tout en se remplissant, à faire le vide dans la dent, d'où formation de bulles remplies de vapeur saturée du liquide utilisé.

Lorsque, dans un second temps, la pompe à simple effet refoule son contenu en direction de la dent par le fin orifice de l'injecteur 24 (la soupape d'admission 14 est alors fermée), la pression croît de façon très rapide (ceci est dû à la fermeture brusque de la soupape automatique 14 et à l'inertie de la colonne d'eau contenue dans la conduite menant à la pompe à engrenage), il en résulte l'implosion des bulles précédemment formées. On sait que l'implosion engendre des effets de choc qui sont capables de détruire, après un plus ou moins long service, des aubes de turbines. A fortiori le nerf d'une racine dentaire.

Cette cavitation dans le liquide se trouvant dans la dent a pour effet aussi de forcer le liquide se trouvant dans la chambre pulpaire à occuper tout le volume disponible, donc à remplir les canaux radiculaires, quelle que soit leur étroitesse.

Le fait de faire l'admission et l'échappement dans l'embout de façon concentrique et avec écoulement en sens inverse facilite la formation des bulles dans la dent et donc de la cavitation. Afin d'éviter que du liquide ne traverse l'apex (extrémité de la racine), une mesure de pression est effectuée juste à la sortie de l'embout. Cette mesure va permettre de commander la vitesse de la pompe de dépression 5 pour avoir dans la chambre pulpaire une pression moyenne toujours légèrement négative. Cette légère dépression va produire une hyperémie passagère au niveau de l'apex, qui va stopper l'action d'attaque du produit (par dilution), s'il s'agit d'ôter le nerf. Au contraire, s'il s'agit de désinfection, il sera possible d'inverser la référence du réglage pour avoir une légère surpression qui va tendre à faire pénétrer le produit utilisé dans le tissu périradiculaire.

La fig. 4 représente la pression, en fonction du temps, dans la dent, au cours d'un cycle de la pompe à piston.

Lors de l'attaque au Dakin, c'est la ligne 31 qu'on observe, tandis que lors de la phase de désinfection, c'est la ligne 32 décalée vers le haut d'une quantité réglable, qui se produit.

En 33, on voit la pression de vapeur du liquide, pendant la phase de dépression dans la dent, lorsque se forment les bulles.

La mesure de pression au moyen du dispositif 10 (fig. 1) est effectuée par un capteur piézo-résistif non représenté. Pour alléger la partie du système venant dans la bouche du patient, et pour mesurer néanmoins le plus près possible de la cavité pulpaire, la prise de pression (capsule avec membrane souple) est montée dans une pièce de raccordement sur le tube d'échappement 30 de l'embout. Un tube capillaire (non représenté) relie la capsule au dispositif de mesure proprement dit 10, qui est monté, lui, dans l'appareil, donc hors de la bouche du patient.

Le signal électrique sortant de l'électronique de mesure donne la valeur moyenne de la pression. La constante de temps pour filtrer les impulsions est de préférence de l'ordre de la seconde.

L'asservissement de la pompe à engrenages à la pression choisie comme référence assure à la pompe à engrenages un nombre de tours minimum pour garantir toujours une légère dépression dans la dent.

Pour contrôler l'attaque par le Dakin du nerf et des vaisseaux associés, on effectue une mesure de résistance entre une électrode constituée par le tuyau métallique central 25 de l'embout 2 (électriquement relié au conducteur 34) et une électrode humide (non représentée) tenue dans la main du patient. Pour faire cette première mesure, on injecte dans la racine du sérum physiologique. La résistivité du sérum est la même que celle des tissus du corps humain, donc du nerf encore en place dans le canal radiculaire. On continue cette mesure après avoir commuté le dispositif 8 sur le Dakin qui a une résistivité dix fois plus basse que le sérum. Dans un premier temps, il se produit une baisse immédiate de résistance, puis cette résistance continue à décroître en fonction de l'avance de l'élimination du nerf et son remplacement par le Dakin, donc l'attaque du nerf.

La mesure de résistance est faite en partant d'une tension alternative de forme carrée, d'une fréquence de 500 Hz, et d'une valeur de crête telle que pour une résistance de 4000 ohms, le courant soit de 100 micro ampères. La tension est maintenue constante, et c'est le rapport entre le "courant sérum" et le "courant Dakin" qui est déterminant pour la mesure de l'avance de l'attaque du nerf.

Lorsque la résistance cesse de décroître, c'est la fin de l'attaque. En effet, à ce moment, le Dakin arrive au contact de sang provenant de l'apex, d'où le changement de résistance.

Contrairement à la mesure de résistance qui vient d'être décrite, pour l'ionophorèse, on applique sur les mêmes électrodes un courant continu. Pour stopper l'attaque, on a remplacé le Dakin par du sérum physiologique, puis stoppé les pompes. Comme il s'agit maintenant de faire passer un certain nombre de coulombs dans la racine, plus le courant sera fort, plus le traitement sera court. Le courant passant entre les deux électrodes va croître sous la commande du dispositif de commande électronique 1. Sur l'électrode humide (l'anode) en main du patient, il y a un bouton qui lui permet de stopper cette augmentation de courant lorsque le passage de ce dernier devient trop désagréable. Le dispositif 1 diminue alors légèrement le courant et calcule le temps d'application nécessaire.

La cylindrée de la pompe à piston est un facteur important de la puissance de cavitation. Il y a un maximum à ne pas dépasser, car sans cela le contrôle de l'attaque du nerf devient difficile si cette attaque est trop rapide. Un temps de travail de 2 à 10 minutes convient très bien. Une cylindrée de 0,35 centimètres cubes, avec un moteur d'entraînement de la pompe tournant à 1200 tours/minute, correspond à un tel maximum à ne pas dépasser.

La pression relative de la pompe de pression sera de préférence comprise entre 0 et 5 bar et la dépression relative de la pompe à dépression sera de préférence variable entre 0 et − 0,8 bar.

Le dispositif électronique de commande générale peut assurer le fonctionnement de l'équipement de façon entièrement automatique, sous la commande d'un programme. Il peut aussi agir de façon semi-automatique. Dans tous les cas, il permettra la commande de la puissance d'attaque du nerf par le Dakin, soit en agissant sur la vitesse du moteur entraînant la pompe de pression, soit en commandant la butée réglable 18 (fig. 2). Il permet aussi la mesure de pression dans la dent, l'asservissement de la pompe à engrenages, le contrôle de la fin de l'attaque, la désinfection, l'agrandissement des canaux radiculaires par l'EDTA, l'opération de désinfection par ionophorèse.

Ce qui précède se rapporte à la première phase du traitement des racines dentaires, soit l'enlèvement complet du nerf et de ses prolongements odontoblastiques, ainsi que des vaisseaux sanguins assurant sa vascularisation et se trouvant dans la cavité dentaire, et désinfection totale de cette cavité.

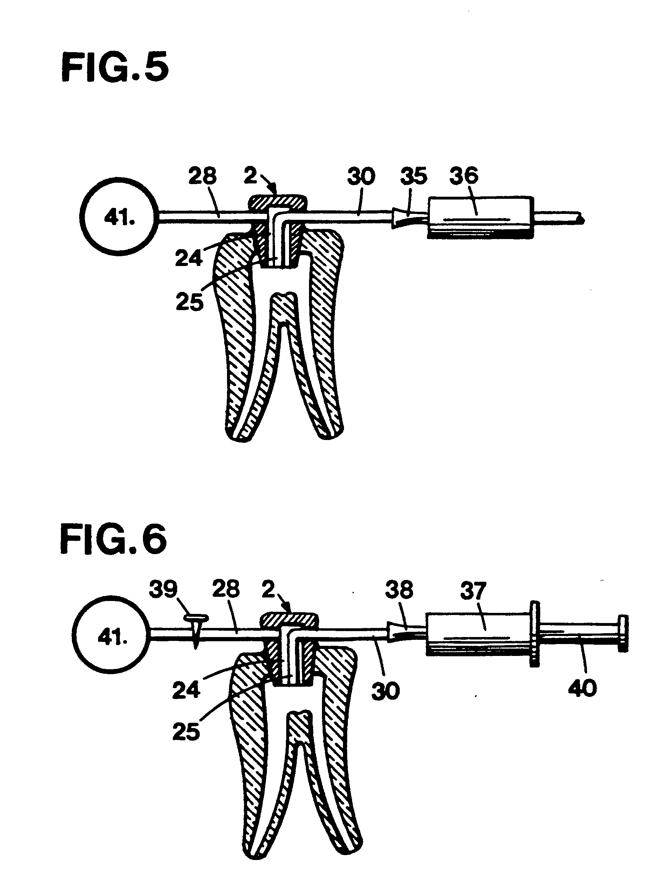

L'équipement décrit peut aussi être utilisé pour la phase finale du traitement, c'est-à-dire le séchage et l'obturation de la cavité dentaire. C'est ce que l'on va décrire maintenant, en référence aux figures 5 et 6.

La pulpe dentaire ayant été enlevée et éliminée et la cavité dentaire ayant été désinfectée, comme décrit, on déconnecte le conduit 30 (fig. 2) de la pompe 5 et on le relie à un conduit 35 relié lui-même à un dispositif de filtration et de chauffage 36 d'air stérilisé. Le conduit 28 reliant l'embout à la pompe 3 (fig. 2) est relié à une pompe à vide 41.

Ceci fait, on met en marche le dispositif de filtration et de séchage 36, ainsi que la pompe d'aspiration 41, pendant 6 minutes par exemple, ce qui assure le séchage parfait de la cavité dentaire. Après cela, on arrête la pompe 41 et on déconnecte le dispositif 36 du conduit 30 de l'embout 2, et on relie à sa place à l'embout 2 une seringue 37 (par exemple une seringue à insuline) par un conduit 38. Cette seringue est remplie d'une pâte d'obturation dentaire préalablement préparée, pendant la première phase du traitement. De plus, une pince de "Mohr" 39 est placée sur le conduit 28 reliant l'embout 2 à la pompe à vide 41 (fig. 6).

Ceci étant fait, on met en marche la pompe à vide 41, pour créer un vide dans la cavité dentaire en pressant un court instant (une seconde par exemple) sur la pince de "Mohr" pour la rendre inopérante. Sous l'effet de la dépression ainsi créée dans la dent, la pâte contenue dans la seringue 37 est aspirée dans la cavité dentaire et la remplit complètement jusque dans les moindres recoins. On peut, par mesure de précaution, exercer simultanément une légère pression sur la tige 40 du piston de la seringue 37, pour compenser l'effet du frottement de la pâte dans cette dernière.

Le travail est ainsi terminé et l'embout est retiré. Un contrôle radiographique éventuel permet de s'assurer de la qualité de l'obturation.

## Revendications

1. Equipement pour le traitement des racines dentaires, comprenant un embout (2) ajustable de façon étanche sur une ouverture de la chambre pulpaire d'une dent, cet embout étant muni d'un injecteur (24) relié à un conduit d'alimentation (28) prévu pour amener du liquide dans la dent, et d'un conduit d'évacuation (25) du liquide se trouvant dans la dent, caractérisé en ce que l'injecteur (24) et le conduit d'évacuation (25) débouchent dans la chambre pulpaire lorsque l'embout (2) est adapté sur une dent, et en ce qu'il comporte des moyens pour obtenir une cavitation comprenant une pompe de dépression (5) reliée de son côté d'entrée au conduit d'évacuation (25), pour régler la pression moyenne et pour produire des bulles de vapeur saturée dans le liquide se trouvant dans la chambre pulpaire et dans le ou les canaux radiculaires de la dent par aspiration dans ces cavités, et comprenant également une pompe de pression à piston (3) reliée à un réservoir de liquide à amener à l'injecteur (24), et reliée au conduit d'alimentation (28) de l'injecteur (24), pour produire une cavitation dans le liquide se trouvant dans la chambre pulpaire et dans le ou les canaux radiculaires de la dent, par implosion desdites bulles par l'action de la pompe de pression à piston (3) sur ce liquide, pour que le liquide introduit dans la dent par l'injecteur remplisse complètement la chambre pulpaire et les canaux radiculaires pour réaliser le nettoyage complet de cette chambre et de ces canaux.

2. Equipement selon la revendication 1, caractérisé en ce que la partie de l'injecteur (24) et la partie du conduit d'évacuation (25) se trouvant dans la cavité dentaire sont concentriques.

3. Equipement selon la revendication 2, caractérisé en ce que ladite partie de l'injecteur (24) est disposée concentriquement autour de celle du conduit d'évacuation (25) et présente une région de section au moins dix fois plus petite que celle du conduit d'évacuation.

4. Equipement selon la revendication 1 ou 3, caractérisé en ce que le conduit d'évacuation est relié à la pompe de dépression (5) par une conduite (30) qui a un volume intérieur suffisant pour que le liquide s'y trouvant présente une inertie s'opposant à l'accélération de son écoulement vers la pompe de dépression (5) pendant la phase de mise sous pression dans la dent, pour assurer une mise sous pression rapide produisant la cavitation.

5. Equipement selon la revendication 1 caractérisé en ce que la pompe de pression à piston (3) est une pompe à simple effet, avec une seule soupape automatique (14) du côté aspiration.

6. Equipement selon la revendication 1, caractérisé en ce que la pompe de pression à piston (3) est munie d'une butée réglable (18) prévue pour coopérer avec la soupape automatique (14) à la fin de sa course de fermeture, pour l'arrêter à une distance réglable de son siège (19).

7. Equipement selon la revendication 1, caractérisé en ce qu'il comporte plusieurs réservoirs (7) pour divers liquides et des moyens de commutation (8) pour relier la pompe de pression à piston (3) sélectivement à ces réservoirs.

8. Equipement selon la revendication 7, caractérisé en ce qu'il comporte des moyens de commande du débit et du temps de fonctionnement des pompes (1).

9. Equipement selon la revendication 7, caractérisé en ce qu'il comporte des moyens pour commander les moyens de commutation selon un programme.

10. Equipement selon la revendication 8, caractérisé en ce que lesdits moyens de commande des pompes sont agencés pour assurer que la pression moyenne dans la chambre pulpaire, pendant le traitement, soit toujours négative.

11. Equipement selon la revendication 1, caractérisé en ce qu'il comporte des moyens de mesure de la résistance électrique du liquide contenu dans la cavité pulpaire et le ou les canaux radiculaires, comprenant une électrode constituée par la partie du conduit d'évacuation se trouvant dans cette cavité, et une autre électrode destinée à être mise en contact humide avec le corps du patient dont on traite une dent.

12. Equipement selon la revendication 1, caractérisé en ce que la pression relative dans la chambre pulpaire est variable entre 0 et 0,5 bar, et en ce que la dépression relative dans cette chambre est variable entre 0 et − 0,8 bar.

13. Equipement selon l'une des revendications précédentes, caractérisé en ce qu'il comporte un dispositif de filtration et de chauffage d'air (36), prévu pour être connecté à l'embout (2) à la place de la pompe de dépression (5), pour assurer le séchage de la cavité dentaire, et en ce qu'il comporte en outre, d'une part, une seringue à pâte dentaire (37), destinée à être reliée par un conduit (38) à l'embout, à la place du dispositif de filtration et de chauffage d'air (36), et, d'autre part, un organe d'obturation (39) du conduit (28) reliant la pompe à vide (41) à l'embout (2), pour commander le remplissage de la cavité dentaire par la pâte d'obturation, sous l'effet de la dépression créée dans cette cavité par la pompe à vide (41).

## Patentansprüche

1. Ausrüstung für die Wurzelbehandlung von Zähnen, bestehend aus einem Aufsatzstück (2), das auf der Oeffnung der Pulpakammer eines Zahns dicht einstellbar ist, wobei dieses Aufsatzstück mit einem Einspritzung (24) ausgebildet ist, an die an eine Speiseleitung (28) zur Einspeisung von Flüssigkeit in den Zahn und eine Entleerungsleitung (25) für im Zahn sich befindliche Flüssigkeit angeschlossen sind, dadurch gekennzeichnet, dass die Einspritzung (24) und die Entleerungsleitung (25) in die Pulpakammer einmünden, während das Aufsatzstück (2) an den Zahn angepasst ist, und dadurch gekennzeichnet, dass sie Mittel zum Erhalt einer Kavitation enthält, bestehend aus einer Druckverminderungspumpe (5), die auf ihrer Eingangsseite mit der Entleerungsleitung (25) verbunden ist zur Einstellung des mittleren Druckes und zur Erzeugung von Sattdampfblasen in der in der Pulpakammer und in den Wurzelkanälen des Zahnes sich befindlichen Flüssigkeit durch Ansaugung in den Höhlungen, und des weiteren bestehend aus einer Druckkolbenpumpe (3), die mit einem Flüssigkeitsbehälter zur Speisung der Einspritzung (24) und mit der Speiseleitung (28) der Einspritzung (24) verbunden ist zwecks Erzeugung einer Kavitation in der in der Kammer und den Wurzelkanälen des Zahnes enthaltenen Flüssigkeit durch Implosion der Blasen durch Einwirkung der Druckkolbenpumpe (3) auf diese Flüssigkeit, damit die in den Zahn durch die Einspritzung (24) geleitete Flüssigkeit die Pulpakammer und Wurzelkanäle vollständig füllt und die vollständige Reinigung dieser Kammer und Kanäle bewirkt.

2. Ausrüstung nach Patentanspruch 1, dadurch gekennzeichnet, dass der Teil der Einspritzung (24) und der Teil der Entleerungsleitung (25), die sich in der Zahnhöhle befinden, zueinander konzentrisch sind.

3. Ausrüstung nach Patentanspruch 2, dadurch gekennzeichnet, dass der erwähnte Teil der Einspritzung (24) konzentrisch zur Entleerungsleitung (25) angeordnet ist, und eine Zone mit einem Querschnitt darstellt, der mindestens zehn mal kleiner als der der Entleerungsleitung (25) ist.

4. Ausrüstung nach Patentanspruch 1 oder 3, dadurch gekennzeichnet, dass die Entleerungsleitung (25) an die Druckverminderungspumpe (5) mit einer Leitung (30) angeschlossen ist, deren Innenvolumen ausreicht, damit die darin sich befindliche Flüssigkeit eine gegen die Beschleunigung ihres Fliessens in Richtung Druckverminderungspumpe (5) während der Unterdrucksetzungsphase des Zahnes gerichtete Trägheit besitzt, um eine die Kavitation bewirkende, rasche Unterdrucksetzung sicherzustellen.

5. Ausrüstung nach Patentanspruch 1, dadurch gekennzeichnet, dass die Druckkolbenpumpe (3) eine einfachwirkende Pumpe mit einem einzigen automatischen Ventil (14) auf der Ansaugseite ist.

6. Ausrüstung nach Patentanspruch 1, dadurch gekennzeichnet, dass die Druckkolbenpumpe (3) mit einem verstellbaren Anschlag (18) zur Zusammenarbeit mit dem automatischen Ventil (14) am Ende seines Schliesshubes ausgebildet ist, um das Ventil in einem einstellbaren Abstand von seinem Sitz (19) zu fixieren.

7. Ausrüstung nach Patentanspruch 1, dadurch gekennzeichnet, dass sie mehrere Behälter (7) für unterschiedliche Flüssigkeiten und Umschaltmittel (8) enthält, um die Druckkolbenpumpe (3) selektiv mit diesen Behältern zu verbinden.

8. Ausrüstung nach Patentanspruch 7, dadurch gekennzeichnet, dass sie Steuermittel für die Fördermenge und Betriebszeit der Pumpen (1) enthält.

9. Ausrüstung nach Patentanspruch 7, dadurch gekennzeichnet, dass sie Mittel zur programmierten Steuerung der Umschaltmittel enthält.

10. Ausrüstung nach Patentanspruch 8, dadurch gekennzeichnet, dass diese Steuermittel für die Pumpen so ausgebildet sind, dass sichergestellt wird, dass während der Behandlung der mittlere Druck in der Pulpakammer stets negativ ist.

11. Ausrüstung nach Patentanspruch 1, dadurch gekennzeichnet, dass sie Mittel zur Messung des elektrischen Widerstandes der in der Pulpahöhlung und dem oder den Wurzelkanälen vorhandenen Flüssigkeit enthält, und diese Mittel eine Elektrode, bestehend aus dem Teil der Entleerungsleitung (25), der sich in dieser Höhlung befindet, und eine weitere Elektrode enthalten, die dazu bestimmt ist, in feuchtem Kontakt mit dem Körper des Patienten während der Zahnbehandlung zu stehen.

12. Ausrüstung nach Patentanspruch 1, dadurch gekennzeichnet, dass der Relativdruck in der Pulpakammer variabel ist und zwischen 0 und 0,5 bar liegt, und dadurch, dass die relative Druckminderung in dieser Kammer auch variabel ist und zwischen 0 und − 0,8 bar liegt.

13. Ausrüstung nach einem der vorhergehenden Patentansprüche, dadurch gekennzeichnet, dass sie eine Filter- und Luftheizvorrichtung (36) enthält, die dazu bestimmt ist, anstelle der Druckverminderungspumpe (5) an das Aufsatzstück (2) angeschlossen zu werden, um die Zahnhöhlung auszutrocknen, und dass sie des weiteren, auf der einen Seite, eine Dentalpastenspritze (37) enthält, die dazu bestimmt ist an eine Leitung (38) des Aufsatzstückes anstelle der Filter- und Luftheizvorrichtung (36) angeschlossen zu werden, und, auf der anderen Seite, ein Absperrorgan (39) für die Leitung (28), welche die Vakuumpumpe (41) mit dem Aufsatzstück (2) verbindet, um die Füllung der Zahnhöhlung mit Verschlusspaste durch Wirkung des Unterdruckes zu steuern, der in dieser Höhlung durch die Vakuumpumpe (41) erzeugt wird.

## Claims

1. Equipment for treating the roots of teeth, comprising a plug (2) which can be fitted in a leaktight manner over an opening in the pulp chamber of a tooth, this plug being provided with an injector (24) joined to a feed tube (28) for bringing liquid into the tooth, and with a discharge tube (25) for the liquid present in the tooth, characterized in that the injector (24) and the discharge tube (25) open out into the pulp chamber when the plug (2) is fitted to a tooth, and in that said equipment has means of producing cavitation, comprising a suction pump (5) joined on its inlet side to the discharge tube (25), for adjusting the average pressure and for producing bubbles of saturated vapour in the liquid present in the pulp chamber and in the root canal or canals of the tooth, by suction in these cavities, and also comprising a piston pressure pump (3) joined to a reservoir of liquid to be brought to the injector (24), and joined to the feed tube (28) for the injector (24), for producing cavitation in the liquid present in the pulp chamber and in the root canal or canals of the tooth, by implosion of said bubbles through the action of the piston pressure pump (3) on this liquid, so that the liquid introduced into the tooth by the injector completely fills the pulp chamber and the root canals and effects complete cleaning of this chamber and these canals.

2. Equipment according to Claim 1, characterized in that the part of the injector (24) and the part of the discharge tube (25) which are located in the dental cavity are concentric.

3. Equipment according to Claim 2, characterized in that said part of the injector (24) is arranged concentrically around said part of the discharge tube (25) and has a region whose section is at least ten times smaller than that of the discharge tube.

4. Equipment according to Claim 1 or Claim 3, characterized in that the discharge tube is joined to the suction pump (5) by a line (30), the internal volume of which is sufficient for the liquid present therein to have an inertia opposing the acceleration of its flow towards the suction pump (5) during the pressurization phase in the tooth, in order to ensure rapid pressurization for producing cavitation.

5. Equipment according to Claim 1, characterized in that the piston pressure pump (3) is a single acting pump with only one automatic valve (14) on the suction side.

6. Equipment according to Claim 1, characterized in that the piston pressure pump (3) is provided with an adjustable guard (18) for cooperating with the automatic valve (14) at the end of its closing stroke, in order to stop it at an adjustable distance from its seat (19).

7. Equipment according to Claim 1, characterized in that it has several reservoirs (7) for various liquids, and switching means (8) for joining the piston pressure pump (3) selectively to these reservoirs.

8. Equipment according to Claim 7, characterized in that it has means (1) of controlling the throughput and operating time of the pumps.

9. Equipment according to Claim 7, characterized in that it has means of controlling the switching means in accordance with a program.

10. Equipment according to Claim 8, characterized in that said means of controlling the pumps are arranged so as to ensure that the average pressure in the pulp chamber during the treatment is always negative.

11. Equipment according to Claim 1, characterized in that it has means of measuring the electrical resistance of the liquid contained in the pulp cavity and the root canal or canals, comprising an electrode consisting of that part of the discharge tube which is located in this cavity, and another electrode which is to be brought into wet contact with the body of the patient whose tooth is being treated.

12. Equipment according to Claim 1, characterized in that the relative positive pressure in the pulp chamber can vary between 0 and 0.5 bar, and in that the relative negative pressure in this chamber can vary between 0 and − 0.8 bar.

13. Equipment according to any one of the preceding claims, characterized in that it has an air filtering and heating device (36) for connection to the plug (2) in place of the suction pump (5), in order to dry the dental cavity, and in that it also has, on the one hand, a dental paste syringe (37) for connection by a tube (38) to the plug in place of the air filtering and heating device (36), and, on the other hand, a blocking means (39) for the tube (28) joining the vacuum pump (41) to the plug (2), in order to control the filling of the dental cavity with the filling paste under the effect of the negative pressure created in this cavity by the vacuum pump (41).

FIG.1

EP 0 299 919 B1

# FIG.2

EP 0 299 919 B1

FIG.3

FIG.4

# FIG.5

# FIG.6